# EUROPEAN PATENT APPLICATION

(11) **EP 1 359 580 A2**
(43) Date of publication of application: **05.11.2003**
(21) Application number: 03009701.8
(22) Date of filing: 30.04.2003
(51) Int. Cl.: G11B 19/12, G11B 20/00

(54) **Recording and reproducing device, copy control method and program**

(30) Priority: 30.04.2002 JP 2002129018; 18.04.2003 JP 2003114571
(71) Applicant: Kabushiki Kaisha Toshiba, Tokyo (JP)
(72) Inventor: Kambayashi, Toru, Intellectual Property Division, Minato-ku Tokyo 105-8001 (JP); Muratani, Hirofumi Intellectual Property Division, Minato-ku Tokyo 105-8001 (JP); Yamakage, Tomoo Intellectual Property Division, Minato-ku Tokyo 105-8001 (JP); Yamada, Hisashi Intellectual Property Division, Minato-ku Tokyo 105-8001 (JP); Kato, Taku Intellectual Property Division, Minato-ku Tokyo 105-8001 (JP)
(74) Representative: HOFFMANN - EITLE

(57) **Abstract**

A rendering device comprises a reader (2) configured to read medium type information showing a classification of a content storage medium, encryption status information relating to an encryption status of content data stored in the content storage medium, and the content data from a target content storage medium, a detector (5) configured to obtain copy control information embedded as a watermark in the content data, and a controller (1) configured to control reproduce of the content data based on the medium type information, the encryption status information and the copy control information.

## Description

The present invention relates to a rendering device to reproduce and output content data recorded on a predetermined medium and a copy control method.

The copy control of a work is performed based on CCI (copy control information). The CCI includes two types of digital CCI (D-CCI) and watermark CCI (WM-CCI). The digital CCI is digital information related to a work of digital data. Then, the watermark CCI is digital information embedded in the work by the use of a watermark technology. The watermark CCI can be also detected from the work expressed as analog signals.

For example, a video content is expressed as digital data of an MPEG 2 form and is recorded in a content storage medium. Digital CCI can be related to the digital data, but this information cannot be detected from the reproduced video content. On the other hand, the watermark CCI embedded in the video content can be detected from the reproduced video content.

A copy control based on the watermark CCI is performed in a recording device. For this reason, in the recording device, it is necessary to check the watermark when the content is recorded and it is necessary to remark it if necessary. Therefore, detection and remark of the watermark cause an obstacle to high-speed recording.

It is an object of the present invention to provide a rendering device and a copy control method capable of performing a safe copy control and high-speed recording.

A rendering device according to a first aspect of the present invention is characterized by comprising: a reader configured to read medium type information showing a classification of a content storage medium, encryption status information relating to an encryption status of content data stored in the content storage medium, and the content data from a target content storage medium; a detector configured to obtain copy control information embedded as a watermark in the content data; and a controller configured to control reproduce of the content data based on the medium type information, the encryption status information and the copy control information.

A copy control method, which is applied to a rendering device for reproducing and outputting content data recorded on a predetermined medium, according to a second aspect of the present invention is characterized by comprising: reading medium type information showing a classification of the content storage medium, encryption status information showing an encryption status of target content data stored in the content storage medium, and the content data, from a target content storage medium; obtaining copy control information embedded as a watermark in the content data; and controlling reproduce of the content data based on the medium type information, the encryption status information, and the copy control information.

A program, which makes a computer function as a rendering device for reproducing and outputting content data recorded on a predetermined medium, according to a third aspect of the present invention is characterized by making the computer realize: a function of reading medium type information showing a classification of the content storage medium, encryption status information showing an encryption status of target content data stored in the content storage medium, and the content data, from a target content storage medium; a function of obtaining copy control information embedded as a watermark in the content data; and a function of controlling reproduce of the content data based on the medium type information, the encryption status information, and the copy control information.

The present invention according to a device can be also established as an invention relating to a method and the present invention according to a method can be also established as an invention relating to a device.

In addition, the present invention according to a device or a method is also established as a program for making a computer execute a procedure corresponding to the invention (or for making a computer function as means corresponding to the invention, or for making a computer realize a function corresponding to the invention) and is also established as a recording medium on which the program is recorded and which can be read by a computer.

According to the present invention, it is possible to perform a safe copy control and high-speed recording.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an illustration of playback by the output of the rendering device and the copy according to the embodiment;
FIG. 2 is an illustration of the copy by the use of a device other than the rendering device according to the embodiment;
FIG. 3 is an illustration showing a configuration example of a rendering device according to one embodiment of the present invention;
FIG. 4 is an illustration showing an example of a method of determining whether playback is preformed or not whether remark is performed or not based on a medium type, encryption information, and watermark CCI;
FIG. 5 is a flow chart showing an example of an operations sequence of a rendering device according to the embodiment;
FIG. 6 is a flow chart showing an example of an operations sequence of the rendering device according to the embodiment;
FIG. 7 is a flow chart showing an example of an operations sequence of the rendering device according to the embodiment;
FIG. 8 is a flow chart showing an example of an operations sequence of the rendering device according to the embodiment;
FIGS. 9A and 9B are illustrations of an operation example of the rendering device according to the embodiment;
FIGS. 10A to 10C are illustrations of an operation example of the rendering device according to the embodiment;
FIGS. 11A and 11B are illustrations of an operation example of the rendering device according to the embodiment;
FIG. 12 is an illustration describing examples of operation of the rendering device according to the embodiment; and
FIG. 13 is an illustration showing another example of a method for determining whether playback is performed or not and whether remark is performed or not based on a medium type, encryption information, and watermark CCI.

The preferred embodiments of the invention will be hereinafter described with reference to the drawings.

In the present embodiment, content data means a digitized work. The content data includes, for example, the content of a motion picture and/or a voice, typically, a movie content, a music content, and the like.

The present embodiment will be described under the assumption that the content data is encoded (compressed) according to a predetermined compressing form such as an MPEG form and stored in a content storage medium (in a case where the content data is stored in the content storage medium without being compressed, compressing and encoding the content data and decoding (expanding) the compressed content data thereto are not required).

In the present embodiment, it is assumed that there may be a case where the content data is encrypted (after compression) and stored in the content storage medium and a case where the content data is not encrypted (after compression) and stored in the content storage medium. In the former case, it is assumed that when the content data is stored in a ROM (Read Only Medium), the content data is encrypted according to an encryption form for ROM (for example, CSS or CPPM) and that when the content data is stored in an RWM (Read Write Medium: a writable medium), the content data is encrypted according to an encryption form for RWM (for example, CPRM).

It is assumed that the ROM storing the content is manufactured by a maker of a content disk or the like (and then is supplied to end users) and the RWM storing the content is manufactured by the end user.

The content storage medium is, for example, a DVD, but any kind of storage medium may be used for the content storage medium.

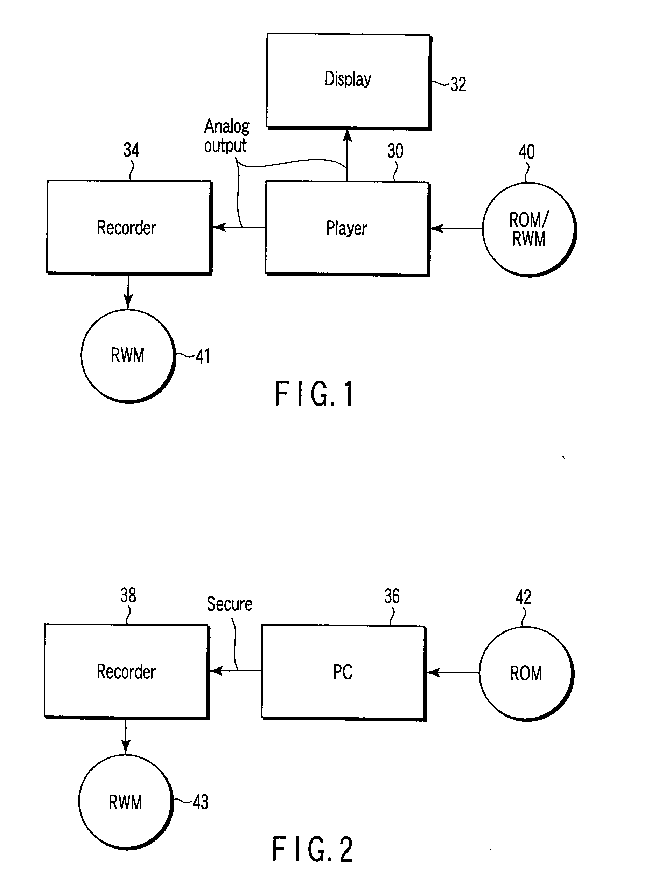

As shown in FIG. 1, a player (rendering device) 30 according to the present embodiment is used by the end user. The player 30 reads the content data stored in a content storage medium 40 (that is, the above-mentioned ROM or RWM) and decrypts the content data if the content data is encrypted. Then, the player 30 expands the content data, D/A converts the expanded content data to an analog signal, and then reproduces and outputs the analog signal (for example, from one or a plurality of analog output terminals). Here, at this time, the player 30 in the present embodiment, as will be later described in detail, controls enable/disable of outputting (reproducing and outputting) of the analog signal and whether copy control information is updated or not, based on predetermined information relating to the content.

The analog signal output from the player 30 can be used for various objects. For example, the content can be appreciated by supplying the analog signal to a device (for example, TV as a display or an output device) for reproducing the content data (displaying images or outputting voices). FIG. 1 shows a case where the analog signal is supplied to a display 32 as an example.

As shown in FIG. 1, the RWM 41, to which the content data is copied, can be made, by supplying the analog signal to a recorder 34. The recorder 34 has, for example, the following functions. The recorder 34 digitizes the analog signal from the player 30, compresses the digitized data, and writes it to the RWM 41 without encryption. Alternatively, the recorder 34 digitizes the analog signal from the player 30, and compresses and encrypts the digitized data, and writes it to the RWM 41.

In the present embodiment, when the player 30 controls enable/disable of outputting (reproducing and outputting) of the analog signal and whether copy control information is updated or not, the following information will be used as determination material used for criteria for determining the control operation:
(1) Medium type information showing the classification of a target content storage medium (medium type) ;
(2) Encryption status information showing whether a target content is encrypted or not and an encryption form used in a case where the content is encrypted; and
(3) Copy control information showing a watermark CCI embedded in the target content as a watermark (electronic watermark) or that the watermark is not embedded in the content.

The medium type information, to be specific, is information showing that the content storage medium is a "ROM" or an "RWM" (for example, in a case where the medium is a DVD, information showing that the content storage medium is a DVD-ROM or a DVD-R/W). It is assumed that the medium type information is protected by some method from being tampered and can be read out of the medium without being tampered.

The encryption status information shows whether the content or a part of the content is encrypted or not and the encryption form used in a case where the content is encrypted (in the procedure examples of the present embodiment, a case where whether the content is encrypted or not is determined for each predetermined amount of data will be described as an example). The following description will be given on the assumption that as specific examples of the encryption status information are used "None" showing a case where the content is not encrypted, "CSS" showing a case where the content is encrypted and a CSS form for ROM is used, "CPPM" showing a case where the content is encrypted and a CPPM form for ROM is used, and "CPRM" showing a case where the content is encrypted and a CPPM form for RWM is used. Further, it is assumed that the encryption status information is also protected by some method from being tampered and that the encryption status information can be read out of the medium without being tampered. In this respect, instead of classifying the specific encryption form as described above, it is also possible to use encryption status information of three values of no encryption, an encryption form for ROM, and an encryption form for RWM.

The copy control information shows whether or not watermark CCI is embedded in the content and in a case where watermark CCI is embedded in the content, the status (content) of the watermark CCI. The watermark CCI is a flag assuming any one of four statuses. These four statuses are "copy free (CF)", "copy once (CO)", "copy never (CN)", and "copy no more (CNM)".

The "copy free" shows that the content can be freely copied.

The "copy once" shows that the content can be copied only once.

The "copy never" shows that the content cannot be copied.

The "copy no more" is a status produced by changing the "copy once" and shows that the content cannot be copied. Changing the "copy once" to the "copy no more" (an operation that the watermark CCI of the "copy no more" is again embedded in the content) is called "remark".

Description will be given on the assumption that "None" showing a case where the watermark CCI is not embedded in the content, "CF" showing a case where the watermark CCI is embedded in the content and its status is "copy free", "CO" showing a case where the watermark CCI is embedded in the content and its status is "copy once", "CN" showing a case where the watermark CCI is embedded in the content and its status is "copy never", and "NM" showing a case where the watermark CCI is embedded in the content and its status is "copy no more" are used as copy control information.

In the present embodiment, it is assumed that the watermark CCI is detected and remarked (embedded) in the state of plain digital data where the content is not encrypted nor compressed. Moreover, it is assumed that the statuses (CF, CO, CN, NM) of the watermark CCI are not changed (remain unchanged) even if the content having the watermark embedded therein is D/A converted and then A/D converted, or even if the content is compressed and then expanded, or even if the content is compressed, encoded, and encrypted and then decrypted and expanded.

In this respect, any publicly known method may be used as a method of detecting the watermark CCI from the content, a method of remarking the watermark CCI embedded in the content, a method of embedding the content, or/and a method of embedding the watermark CCI in the content.

Here, in addition to the watermark CCI embedded in the content itself, there are digital CCI (CF, CO, CN, NM) that are added to the content and used as digital information, but the digital CCI will not be used in the present embodiment.

Further, it is also assumed in the present embodiment that the following copy is made. For example, as shown in FIG. 2, a PC 36 having started some copy tool reads content from a ROM 42 and securely supplies the content to a recorder 38 according to, for example, the DTCP of IEEE1394. The content is copied on an RWM 43 by the recorder 38. In this case, if the content is encrypted, it is once unencrypted by the PC 36. The PC 36 securely transfers a digital content that is compressed but not encrypted to the recorder 38. The recorder 38 encrypts the compressed digital content in the form of CPRM or the like and writes it to the RWM 43. In this case, when the RWM 43 is compared with the original ROM 42, the content is the same in the watermark CCI and different in the encryption form of the content.

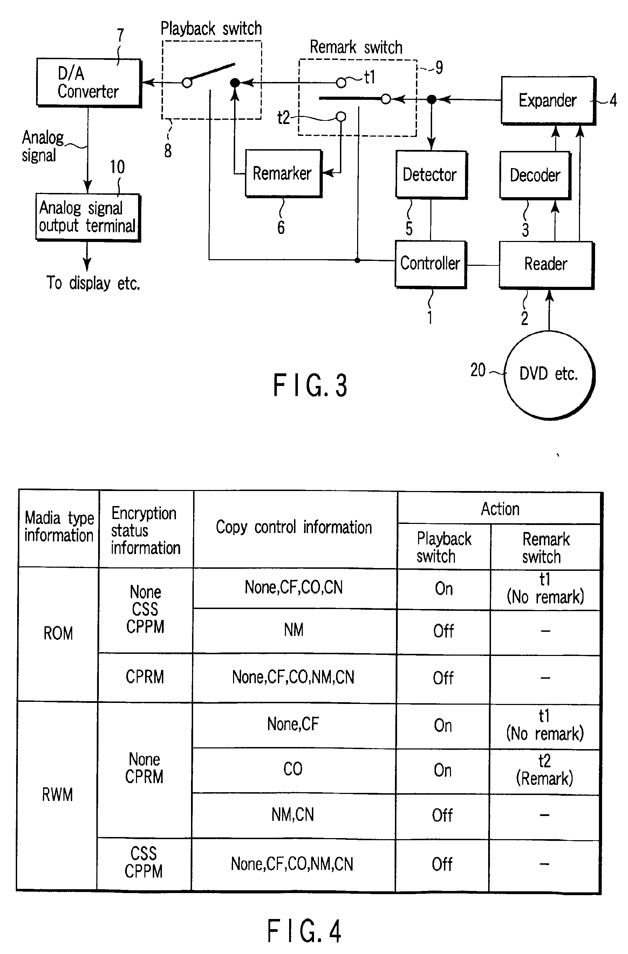

An example of configuration of a player (rendering device) according to one embodiment of the present invention is shown in FIG. 3.

As shown in FIG. 3, the player of the present embodiment has a controller 1, an authorized reader (hereinafter referred to as a reader) 2, a decoder 3 (that decrypts the encrypted content), an expander 4 (that decrypts the compressed content), a watermark detector (hereinafter referred to as a detector) 5, a watermark remarker (hereinafter referred to as a remarker) 6, a D/A converter 7, a first switch (hereinafter referred to as a playback switch) 8, and a second switch (hereinafter referred to as a remark switch) 9.

Here, in FIG. 3, the remark switch 9 and the remarker 6 are arranged at the following stage of the expander 4 and the playback switch 8 is arranged at the following stage of the remark switch 9 and the remarker 6. However, this is an example and, for example, the playback switch 8 may be arranged at the following stage of the expander 4, and the remark switch 9 and the remarker 6 may be arranged at the following stage of the playback switch 8.

Further, the player in FIG. 3 can be realized only by hardware, or a portion that does not necessarily need hardware, for example, a portion for calculation can be realized by software. It is desirable that the content can be utilized only as an analog signal from the outside.

As already described above, the content data is recorded on a content storage medium 20, for example, a DVD.

The reader 2 reads the medium type information of the target content storage medium 20, the encryption status information of the target content stored in the content storage medium 20, and the content (compressed code).

In a case where the content is encrypted, the decoder 3 decrypts the encrypted content according to an encryption form shown by the encryption status information obtained by the reader 2.

The expander 4 expands the compressed code of the content according to a predetermined compressing form, for example, an MPEG form and outputs the digital data (digital code) of the expanded content.

The detector 5 detects the watermark CCI embedded in the digital data obtained by the expander 4 (or detects that the watermark is not embedded in the digital data) and obtains copy control information.

Only in a case where the copy control information obtained by the detector 5 is "CO", the remarker 6 changes the watermark CCI in the code of the digital data, which is output from the expander 4, from "CO" to "CNM".

The D/A converter 7 converts the digital data output from the detector 5 (however, in a case where the copy control information is "CO", the remarked digital data output from the remarker 6) to an analog signal. The analog signal is output to the outside from an analog output terminal 10.

The controller 1 controls the operations of the player. Further, the controller 1 controls the playback switch 8 and the remark switch 9 based on the medium type information and the encryption status information from the reader 2 and the copy control information from the detector 4.

In FIG. 4, an operation table (criteria) for determining the control operation based on the medium type information, the encryption status information, and the copy control information is shown in the form of a table.

Here, FIG. 4 shows an example in which the player supports the encryption forms of CSS, CPPM, and CPPM. For example, in a case where the encryption form for ROM (that is assumed as X) is added, the encryption form X can be used in the same way as the CSS and CPPM, and in a case where the encryption form for RWM (that is assumed as Y) is added, the encryption form Y can be used in the same way as the CPRM.

In FIG. 4, determination based on the respective information will be made as follows.

For example, in a case where the medium type information = "RWM" and the encryption status information = "CPRM" and the copy control information = "CF", it is determined that the playback switch is turned on (is enabled to output data) and that the remark switch is brought to a state where a t1 side is conductive (that is, no remark), whereby the content is controlled in this manner.

Similarly, for example, in a case where the medium type information = "RWM" and the encryption status information = "CPRM" and the copy control information = "CN", it is determined that the playback switch is turned off (is disabled from outputting data).

In this respect, in a case where the playback switch is turned off (disabled from outputting data), the remark switch does not make sense, so that it can be handled in any way (for example, it can be brought to a state where the t1 side is conductive or to a state where neither the t1 side nor the t2 side is conductive). Here, in this case, description will be given on the assumption that the remark switch is brought to a state where the t1 side is conductive.

Further, for example, in a case where the medium type information = "RWM" and the encryption status information = "CPRM" and the copy control information = "CO", it is determined that the playback switch is turned on (is enabled to output data) and the remark switch 2 is brought to a state where the t2 side is conductive (with remark).

By the way, in FIG. 4, in a case where the medium type is ROM, the content storage medium is a read-only medium. A package medium for selling content applies to this. The package media with the same content are manufactured in large quantity at a factory by a method of printing or the like.

In FIG. 4, in a case where the watermark CCI is embedded in the content, it is assumed that the status of the watermark is "CF", "CN", or "CO" and is not "NM" for a normal watermark CCI (if the watermark CCI is "NM", it is assumed to be not normal).

Incidentally, in a case where the content is encrypted in a form other than the predetermined encryption form for ROM, the analog signal is disabled from being output because the content cannot be decrypted or is in an unexpected state such as an invalid copy.

On the other hand, in a case where the medium type is RWM, the content storage medium is a writable medium. Basically, this is made by the end user.

In FIG. 4, in a case where the watermark CCI is embedded in the content, it is assumed that the status of the watermark is "CF" or "CO" and is not "NM" or "CN" for the normal watermark CCI (if the watermark CCI is "NM" or "CN", it is assumed to be not normal). Moreover, if the content has the watermark CCI "CO" embedded therein, it is remarked.

Incidentally, in a case where the content is encrypted in a form other than the predetermined encryption form for RWM, the analog signal is disabled from being output because the content cannot be decrypted or is in an unexpected state such as an invalid copy.

Further, in FIG. 4, it is also assumed that in a case where a watermark CCI is not embedded in the content stored in the medium, the content is supported regardless of whether the medium is the ROM or the RWM.

In this respect, in a case where when determination is made based on FIG. 4, if the medium type information may be neither the ROM nor the RWM, there are a method of processing the medium under the assumption that the medium type information is the RAM and a method of turning off the playback switch (disabling output).

Further, in a case where when determination is made based on FIG. 4, if the encryption status information may not be None, CSS, CPPM, or CPRM, it is assumed that the playback switch is turned off (output is disabled).

Still further, in a case where when determination is made based on FIG. 4, if the copy control information may not be None, CF, CO, CN, NM, there are a method of assuming the content to be CF, or conversely, a method of assuming the content to be CN, and a method of turning off the playback switch (disabling output).

An example of operation of the player according to the present embodiment will be described below.

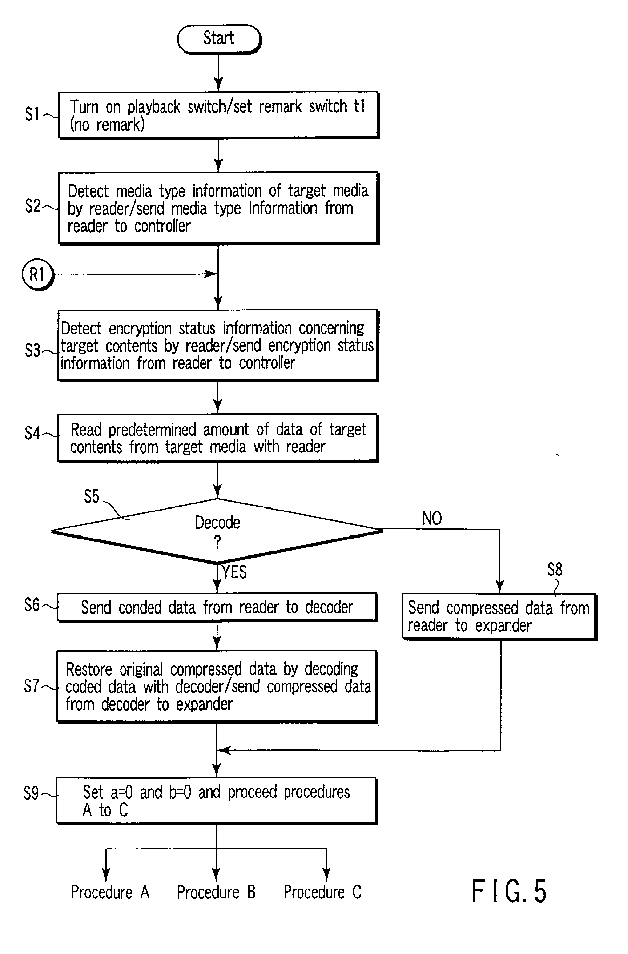

In FIG. 5 to FIG. 8 will be shown a procedure example of the player.

Here, in this procedure example, a case where processing is repeated for a predetermined amount of data will be described (an example in which the encryption status information and the copy control information are also checked for a predetermined amount of data).

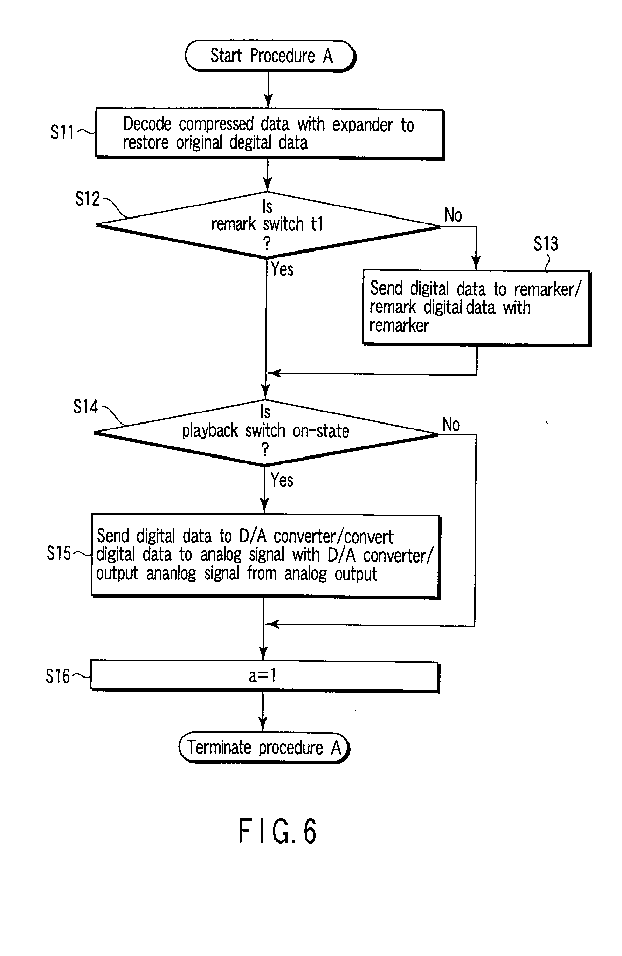

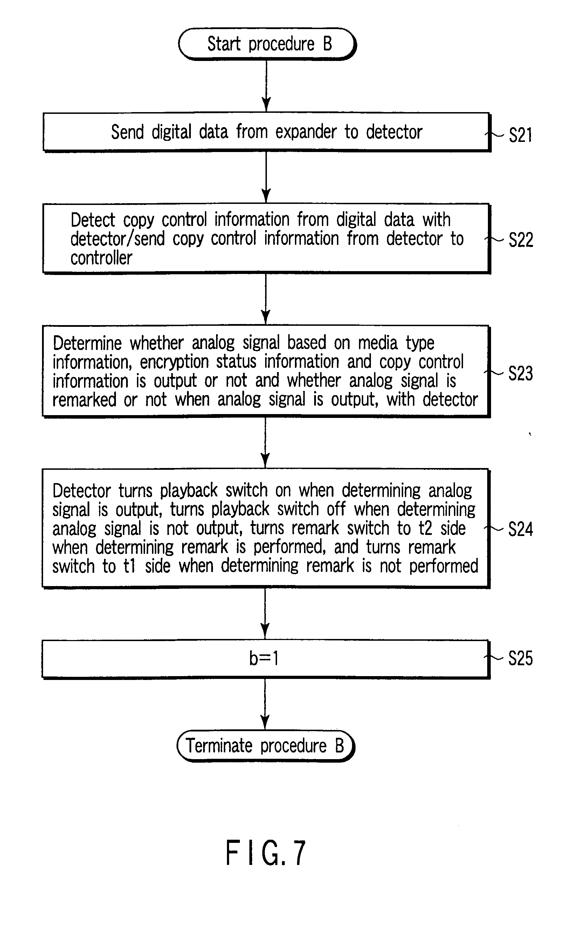

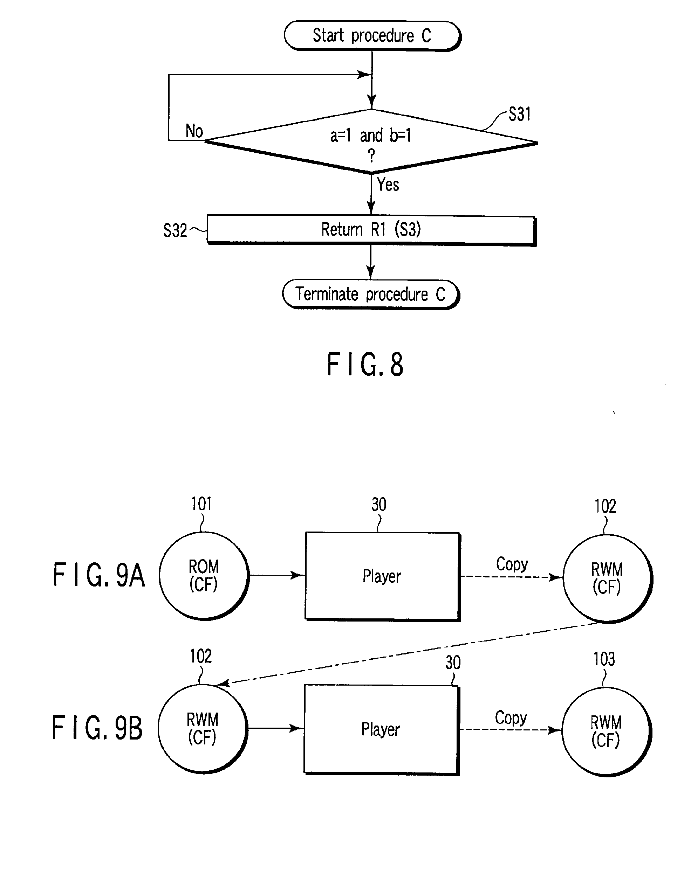

Further, in the present procedure example, an operational flow is branched into three procedures of a procedure A, a procedure B, and a procedure C in midstream (see FIG. 5). It is assumed that the three branched procedures are executed in parallel. In the present procedure example, a variable a and a variable b stored in the controller 1 monitor the termination of the procedure A (FIG. 6) and the procedure B (FIG. 7). The procedure C (FIG. 8) is a procedure for monitoring the termination of the procedure A and the procedure B and for executing a repeated processing for the next predetermined amount of data. It is assumed that the control of the switches 7, 8 performed by the controller 1 in FIG. 7 is performed based on FIG. 4.

In the procedures in FIG. 5 to FIG. 8, first, in the initial state, the playback switch 8 is turned on and the remark switch is turned to t1 (no remark) (S1).

The reader 2 detects the medium type information of the target medium 20, and the medium type information is sent from the reader 2 to the controller 1 (S2). In this example, the medium type information is assumed to be "ROM" or "RWM".

In this procedure, the following processing is repeated for a predetermined amount of data of the target content.

That is, the reader 2 detects the encryption status information relating to the target content and the encryption status information is sent from the reader 2 to the controller 1 (S3). In this example, the encryption status information is assumed to be "None", "CSS", "CPPM, or "CPRM".

Next, the reader 2 reads a predetermined amount of data of the target content from the target medium 20 (S4).

Here, the reader 2 refers to the encryption status information. If the encryption status information is any one of "CSS", "CPPM, and "CPRM" (S5), the reader 2 sends the predetermined amount of data of the target content to the decoder 3 (S6). The decoder 3 decrypts the encrypted data sent from the reader 2 (according to the encryption form shown by the encryption status information) and sends the data obtained in this manner (compressed data) to the expander 4 (S7).

On the other hand, if the encryption status information is "None" (S5), the reader 2 sends the predetermined amount of data of the target content (compressed data) to the expander 4 (S8).

In this respect, in a case where the reader 2 detects an unsupported encryption form other than "CSS", "CPPM, or "CPRM", only the predetermined amount of data may be disabled from being output because the predetermined amount of data can not be decrypted. Further, in this case, the procedure itself in FIG. 5 to FIG. 8 may be stopped and some error message may be displayed.

In either of these cases, when the compressed data is sent to the expander 4, set the variables a = 0 and the variable b = 0 and advance the processing to the following procedures A to C (executed in parallel).

In the procedure A (FIG. 6), first, the expander 4 expands the sent compressed data to generate (restore) the original digital data (S11).

Here, if the remark switch 9 is turned to t2 (that is, remark) and the playback switch is in on state (S12, S14), the digital data is given to the remarker 6 via the remark switch 9. The remarker 6 remarks the digital data. That is, the remarker 6 embeds watermark CCI of "NM" in the digital data (S13). The remarked digital data is sent to the D/A converter 7 via the playback switch 8. The D/A converter 7 converts the digital data to an analog signal. Then, the content is output as the analog signal from the analog output terminal 10 (S15).

On the other hand, if the remark switch 9 is turned to t1 (that is, no remark) and the playback switch 8 is in on state (S12, S14), the digital data is sent to the D/A converter 7 via the switches 9, 8. The D/A converter 7 converts the digital data to an analog signal. Then, the content is output as the analog signal from the analog output terminal 10 (S15).

If the playback switch 8 is in off state (S12, S14), the output of the analog signal is disabled.

Then, in any cases, in order to show the completion of the procedure A, set the variable a = 1.

In the procedure B (FIG. 7), first, the original digital data that is obtained by expanding the compressed data with the expander 4 is sent from the expander 4 to the detector 5 (S21).

The detector 5 detects the watermark CCI from the sent digital data and sends the copy control information obtained from the detection result to the controller 1 (S22).

The controller 1 determines whether the playback switch 8 is turned on (that is, the analog signal is enabled to be output) or off (that is, the analog signal is disabled from being output), and whether, in a case where the analog signal is enabled to be output, the remark switch 9 is turned to t1 (that is, no remark) or turned to t2 (that is, remark) with reference to the operation table in FIG. 4, based on the medium type information and the encryption status information which are sent from the reader 2 and the copy control information which is sent from the detector 5 (S23).

Then, the controller 1 performs the following control (S24). In a case where it is determined that the analog signal is enabled to be output, the playback switch 8 is turned on. In a case where it is determined that the analog signal is disabled from being output, the playback switch 8 is turned off. Further, in a case where it is determined that remarking is performed, the remark switch 9 is turned to t2. In a case where it is determined that remarking is not performed, the remark switch 9 is turned to t1.

Then, in any cases, in order to show that the procedure B is completed, set the variable b = 1 (S25).

In the procedure C (FIG. 8), the value of a and the value of b is monitored and, when the value of a = 1 and the value of b = 1, that is, both of the procedure A and the procedure B are completed (S31), the operation proceeds to R1 in FIG. 5, that is, step S3, and the processing is continuously repeated for the next predetermined amount of data.

Here, if the target content to be read out from the target medium 20 does not remain, the processing is terminated.

The procedure in FIG. 5 to FIG. 8 can be also modified, for example, the order of the processings can be changed in a proper order or the processings can be performed in parallel.

Further, in addition to the procedure in FIG. 5 to FIG. 8, various procedures can be preformed to obtain the same effect. For example, a procedure of checking the encryption status information only once for the whole content or a procedure of checking the copy control information only once for the whole content can be also performed.

In the following, some specific embodiments will be described.

Here, in the following examples, description will be presented on the assumption that the encryption status information for ROM is "CSS" and the encryption status information for RWM is "CPRM". Moreover, the description will be presented on the assumption that the content is assumed to be encrypted when the content is copied.

### (First example)

For example, as shown in FIG. 9A, in a case where a medium 101 is targeted in which medium type information = "ROM" and encryption status information = "CSS" and copy control information = "CF" (copy free), the player 30 is enabled to output an analog signal of the medium 101. By inputting the analog output to some recorder (not shown), it is possible to produce a medium 102 in which medium type information = "RWM" and encryption status information = "CPRM" and copy control information = "CF" with the recorder (not shown).

Next, as shown in FIG. 9B, the player 30 is also enabled to output the analog signal of the medium 102. Thus, by inputting the analog output to some recorder (not shown), it is possible to produce a medium 103 in which medium type information = "RWM" and encryption status information = "CPRM" and copy control information = "CF" with the recorder (not shown).

In this case, it is possible to freely make copies thereafter in the same way.

### (Second Example)

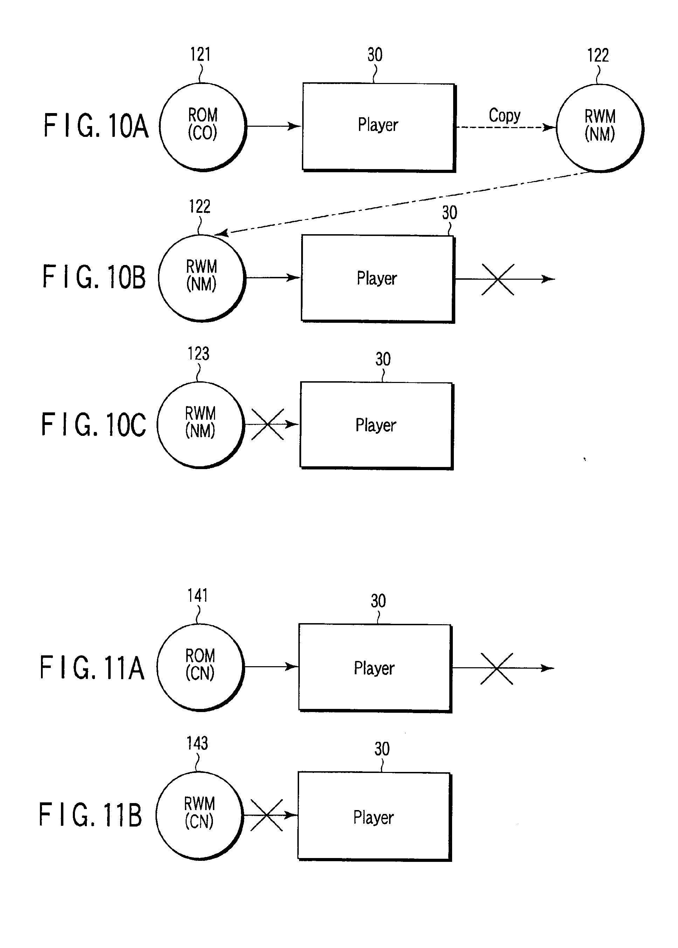

For example, as shown in FIG. 10A, in a case where a medium 121 is targeted in which medium type information = "ROM" and encryption status information = "CSS" and copy control information = "CO" (copy once), the player 30 is enabled to output the analog signal of the medium 121 (no remark). By inputting the analog signal some recorder (not shown), it is possible to produce a medium 122 in which medium type information = "RWM" and encryption status information = "CPRM" and copy control information = "CO" with the recorder (not shown).

Next, as shown in FIG. 10B, the player 30 is enabled to output the analog signal of the medium 122. However, in the present example, the watermark CCI is remarked as "NM", which is different from the embodiment 1. In this case, even if the analog output of a content with the watermark CCI = "NM" is inputted to some recorder (not shown), if the recorder performs a control of disabling copying the content with the watermark CCI = "NM", the recorder cannot further make a copy of the content. That is, the content can be reproduced but cannot be copied.

Further, even if in the case shown in FIG. 10B, some recorder can produce a medium (123 in FIG. 10C) in which medium type information = "RWM" and encryption status information = "CPRM" and copy control information = "NM" (because even if watermark CCI = "NM", the recorder is not disabled from copying) based on the analog output of the player 30, the player 30 is disabled from outputting the analog signal to the medium 123, so that playback cannot be preformed by the player 30. That is, such copying is of no use for the player 30.

### (Third Example)

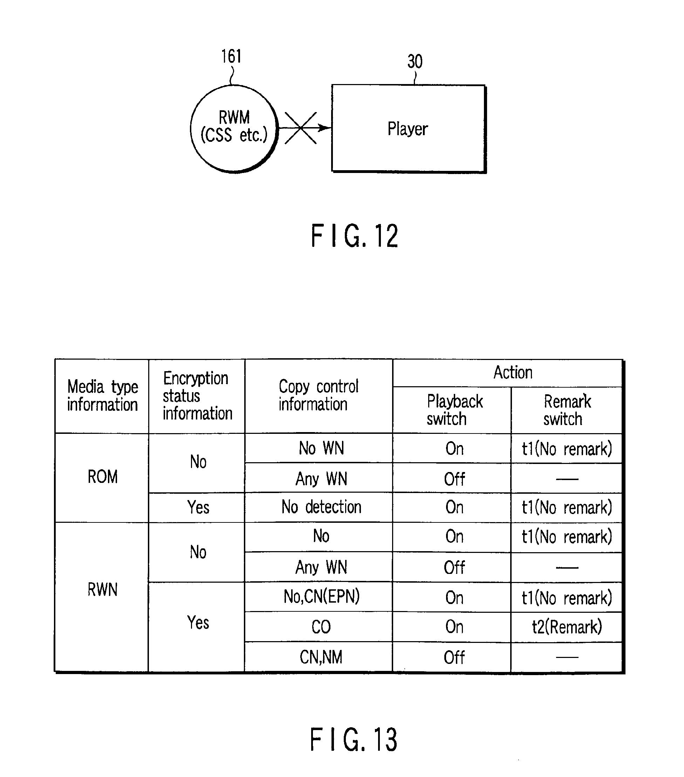

For example, as shown in FIG. 11A, in a case where a medium 141 is targeted in which medium type information = "ROM" and encryption status information = "CSS" and copy control information = "CN" (copy never), the player 30 is enabled to output the analog signal of the medium 141. However, in this case, even if the analog signal of a content with watermark CCI = "CN" is output to some recorder (not shown), if the recorder performs a control of disabling copying the content with watermark CCI = "CN", the recorder cannot further make a copy of the content. That is, the content can be reproduced but cannot be copied.

Further, even if in the case shown in FIG. 11A, some recorder can produce a medium (143 in FIG. 11B) in which medium type information = "RWM" and encryption status information = "CPRM" and copy control information = "CN" (because the recorder is not disabled from copying even if watermark CCI = "NM") based on the analog output of the player 30, the player 30 is disabled from outputting the analog signal to this medium 143, so that playback cannot be performed by the layer 30. That is, such copying is of no use for the player 30.

### (Fourth Example)

For example, as shown in FIG. 12, even if a medium in which medium type information = "ROM" and encryption status information = "CSS" and copy control information = "CN" (copy never) is copied by some method to produce a medium 161 having the same content, that is, in which identification information = "ROM" and encryption status information = "CSS" and copy control information = "CN" (copy never), the player 30 is disabled from outputting the analog signal in a case where the medium 161 is a target. That is, such copying is of no use for the player 30.

Incidentally, while the description has been presented up to this point on the assumption that the content in which the watermark CCI is not embedded is also supported (is processed in the same way as the one in which the watermark CCI is embedded in the example in FIG. 4), it is also possible to use a method of not supporting a content in which the watermark CCI is not embedded (for example, a method in which if a content has no watermark CCI embedded therein, the output of the analog signal of the content is completely disabled regardless of its medium type information and copy control information).

Further, while the description has been given up to this point on the assumption that the content not encrypted is also supported (is processed in the same way as the one which is encrypted in a predetermined encryption form in the example in FIG. 4), it is also possible to use a method of not supporting the content that is not encrypted (for example, a method in which if a content is not encrypted, the output of the analog signal of the content is completely disabled regardless of its medium type information and copy control information).

Still further, in addition to these methods, it is also possible to modify the contents of FIG. 4.

For example, FIG. 13 shows an example of a method of determining whether playback is performed or not and whether remark is performed or not based on the medium type, the encryption status information, and the watermark CCI. Here, in FIG. 13, as for the encryption status, it is determined only whether the content is encrypted or not.

First, in a case where the content is not encrypted, the same control is performed for the medium type information of "ROM" and "RWM". That is, in a case where the content is not encrypted and the watermark CCI is not detected, the content is output but is not remarked for the medium. Moreover, in a case where the content is not encrypted but the watermark (any kind of watermark) is detected, the content is not output but is remarked for the medium.

In a case where the content is encrypted and the medium type information is "ROM", usually, the watermark is not detected, so that the content is output but is not remarked.

In a case where the content is encrypted and the medium type information is "RWM", substantially the same control as shown in FIG. 4 is performed. But in a case where the watermark is not detected and in a case where the copy control information is CN(EPN), content is output but is not remarked. Here, CN(EPN) of the copy control information shows that analog playback signal cannot be copied but can be copied in any number of times if it is protected by digital encryption.

As described above, according to the medium type information, the encryption status information, and the copy control information, the content of control can be suitably changed.

Here, the respective functions described above can be realized as software.

Further, the present embodiment can be implemented as a program for making a computer execute predetermined means (or for making a computer function as predetermined means, or for making a computer realize a predetermined function) and can be performed as a recording medium that records the program and can be read by a computer.

Incidentally, the configurations shown as examples in the embodiments of this invention are examples and it is not intended to exclude other configurations. Other configurations can be acceptable that can be obtained by replacing a part of the configuration shown as the example with another part, by omitting a part of the configuration shown as the example, by adding or combining the other function or element to or with the configuration shown as the example. Further, other configurations that are logically equivalent to the configuration shown as the example, other configurations including a part that is logically equivalent to the configuration shown as the example, and other configurations that are logically equivalent to a main part of the configuration shown as the example can be also accepted. Still further, other configurations capable of accomplishing the object that is equal or analogous to the object that the configuration shown as the example accomplishes and the other configurations capable of producing the effect that is equal or analogous to the effect that the configuration shown as the example produces can be also accepted.

Still further, variations of various constituent parts shown as examples in the embodiments of this invention can be implemented in suitable combination.

Moreover, the embodiments of this invention include inventions relating to various kinds of viewpoints, steps, ideas and categories such as an invention as a device, an invention of two or more devices relating to each other, an invention as the whole system, an invention of constituent parts in individual devices, an invention of methods corresponding to them.

Therefore, it is possible to extract inventions from the content disclosed in the embodiments of this invention without being limited by the configurations shown as the examples.

The present invention is not limited to the above-mentioned embodiments, but can be variously modified within its technical range.

According to the present invention, it is possible to perform a safe copy control and high-speed recording.

## Claims

1. A rendering device **characterized by** comprising:
a reader (2) configured to read medium type information showing a classification of a content storage medium, encryption status information relating to an encryption status of content data stored in the content storage medium, and the content data from a target content storage medium;
a detector (5) configured to obtain copy control information embedded as a watermark in the content data; and
a controller (1) configured to control reproduce of the content data based on the medium type information, the encryption status information and the copy control information.

2. The rendering device according to claim 1, **characterized in that** the controller controls whether reproduce of the content data is enabled or disabled.

3. The rendering device according to claim 1 or 2, **characterized in that** the controller enables reproduce of the content data in a case where a combination of the medium type information, the encryption status information, and the copy control information satisfies a predetermined condition, and disables reproduce of the content data in a case other than the above-mentioned case.

4. The rendering device according to claim 2 or 3, **characterized by** further comprising a switch (8) configured to switch between a status in which the content data is reproduced and output and a status in which the content data is neither reproduced nor output according to a determination, made by the controller, of enabling or disabling reproduce of the content data.

5. The rendering device according to any one of claims 1 to 3, **characterized in that** the controller controls change of the copy control information embedded as a watermark in the content data.

6. The rendering device according to claim 5, **characterized in that** the controller determines to change the copy control information embedded as the watermark in the content in a case where a combination of the medium type information, the encryption status information, and the copy control information satisfies a predetermined condition and determines not to change the copy control information in a case other than the above-mentioned case.

7. The rendering device according to claim 5 or 6, **characterized by** further comprising a changer (6) configured to change the copy control information embedded as the watermark in the content data to a predetermined specific content and to rebury the predetermined specific content as a watermark, only in a case where the controller determines to change the copy control information.

8. The rendering device according to claim 7, **characterized in that**, when the content data is neither encrypted nor compressed, the detector detects the copy control information embedded as the watermark from the content data and the changer changes the copy control information detected for the content data to the specific content and reburies the specific content as a watermark.

9. The rendering device according to any one of claims 1 to 8, **characterized by** further comprising a decryption (3) unit configured to decrypt the content data when the content data read from the content storage medium is encrypted.

10. The rendering device according to any one of claims 1 to 9, **characterized by** further comprising a converter (7) configured to convert the content data read from the content storage medium to an analog signal and to output the analog signal to the external device.

11. The rendering device according to any one of claims 1 to 10, **characterized in that**
the medium type information includes first medium type information showing a read-only medium and second identification information showing a writable medium,
the encryption status information includes first encryption status information showing an encryption form used for encrypting the content data, and
the copy control information includes any one of first copy control information showing that there is no limitation on copying, second copy control information showing that copying is enabled only once, third copy control information showing that copying is disabled and the second copy control information is updated, and fourth copy control information showing that copying is disabled.

12. The rendering device according to claim 11, **characterized in that**
the encryption status information includes either the first encryption status information or second encryption status information showing that the content data is not encrypted, and
the copy control information includes any one of the first to fourth copy control information and fifth copy control information showing that a watermark for copy control is not embedded in the content data.

13. The rendering device according to claim 11 or 12, **characterized in that**, when the medium type information is the first medium type information and the encryption status information meets the first medium type information and the copy control information is information other than the third copy control information or is not added, the controller determines to enable reproduce of the content data and not to change the copy control information embedded as the watermark in the content data.

14. The rendering device according to any one of claims 11 to 13, **characterized in that**, when the medium type information is the first medium type information and the encryption status information meets the first medium type information and the copy control information is the third copy control information or is added, the controller determines to disable reproduce of the content data.

15. The rendering device according to any one of claims 11 to 14, **characterized in that**, when the medium type information is the first medium type information and the encryption status information does not meet the first medium type information, the controller determines to disable reproduce of the content data regardless of the copy control information.

16. The rendering device according to claim 11 or 15, **characterized in that**, when the medium type information is the second medium type information and the encryption status information meets the second medium type information and the copy control information is the first copy control information, the controller determines to enable reproduce of the content data and not to change the copy control information embedded as the watermark in the content data.

17. The rendering device according to claim 11 or 15, **characterized in that**, when the medium type information is the second medium type information and the encryption status information meets the second medium type information and the copy control information is the second copy control information, the controller determines to enable reproduce of the content data and change the copy control information embedded as the watermark in the content data.

18. The rendering device according to any one of claims 11 or 17, **characterized in that**, when the medium type information is the second medium type information and the encryption status information meets the second medium type information and the copy control information is the third or fourth copy control information, the controller determines to disable reproduce of the content data.

19. The rendering device according to any one of claims 11 or 18, **characterized in that**, when the medium type information is the second medium type information and the encryption status information does not meet the second medium type information, the controller determines to disable reproduce of the content data regardless of the copy control information.

20. The rendering device according to any one of claims 11 to 19, **characterized in that**, when the medium type information is information other than the first and second medium type information, the controller performs the control on the assumption that the medium type information is the second medium type information.

21. The rendering device according to any one of claims 11 or 20, **characterized in that**, when the medium type information is information other than the first and second medium type information, the controller determines to disable reproduce of the content data.

22. A copy control method in a rendering device for reproducing and outputting content data recorded on a predetermined medium, the method **characterized by** comprising:
reading medium type information showing a classification of the content storage medium, encryption status information showing an encryption status of target content data stored in the content storage medium, and the content data, from a target content storage medium;
obtaining copy control information embedded as a watermark in the content data; and
controlling reproduce of the content data based on the medium type information, the encryption status information, and the copy control information.

23. A program for making a computer function as a rendering device for reproducing and outputting content data recorded on a predetermined medium, the program making the computer realize:
a function of reading medium type information showing a classification of the content storage medium, encryption status information showing an encryption status of target content data stored in the content storage medium, and the content data, from a target content storage medium;
a function of obtaining copy control information embedded as a watermark in the content data; and
a function of controlling reproduce of the content data based on the medium type information, the encryption status information, and the copy control information.
